# EUROPEAN PATENT SPECIFICATION

(11) **EP 2 818 033 B1**
(45) Date of publication and mention of the grant of the patent: **10.08.2016**
(21) Application number: 13174411.2
(22) Date of filing: 28.06.2013
(51) Int. Cl.: A01D 34/73

(54) **Cutter and rotary support head**
Schneider und rotierender Haltekopf
Tête de support rotatif et outil de coupe

(43) Date of publication of application: 31.12.2014
(73) Proprietor: ROBERT BOSCH GMBH, 70442 Stuttgart (DE)
(72) Inventor: Glanville, Mark, Ipswich IP4 4RL (GB); Lister, John, Bury St.Edmunds IP32 7PT (GB); Bissell, John, Claydon, Suffolk IP6 0AN (GB); Daniel, Nagy, 2660 Balassagyarmat (HU)

(56) References cited:
- EP-A1- 0 807 374
- WO-A2-2012/036572
- DE-U1-202011 050 525
- GB-A- 1 477 286
- US-A- 6 119 350
- US-A1- 2002 032 965

## Description

### Prior Art

The present invention relates to a cutter and a rotary support head of a vegetation cutter.

The document DE 20 2011 050 525 U1 discloses a cutter for a vegetation cutting tool comprises a mounting portion for mounting the cutter to a rotary support head of the vegetation cutting tool, wherein the mounting portion has at least one longitudinal axis, and at least one blade portion for cutting vegetation, wherein the blade portion radially extends away from the longitudinal axis and has a first side and a second side opposite from the first side, wherein the longitudinal axis is at least substantially at a right angle to the first side and second side, wherein the mounting portion further comprises a first mounting section and a second mounting section for radially supporting the cutter when mounted to the rotary support head, wherein the first mounting section has a first outer circumference which axially extends away from first side of the blade portion and has at least a first outer diameter and wherein the second mounting section has a second outer circumference which axially extends away from the second side of the blade portion and has at least a second outer diameter.

The document EP 0 807 374 A1 discloses a rotary support head for the cutter of a vegetation cutting tool comprises a mounting seat for mounting the mounting portion of a cutter, wherein the mounting seat has at least one longitudinal axis, and at least one radial blade opening for a blade portion of the cutter wherein the blade opening radially extends away from the mounting seat and the longitudinal axis towards the outer circumference of the rotary support head and has a first side and a second side opposite from the first side, wherein the longitudinal axis is at least substantially at a right angle to the first side and second side, the mounting seat further comprising a first mounting seat section and a second mounting seat section for radially supporting the cutter when mounted to the rotary support head, wherein the first mounting seat section has a first inner circumference which axially extends away from the blade opening, is parallel to the longitudinal axis and has a first inner diameter and wherein the second mounting seat section has a second inner circumference which axially extends away from the blade opening, is parallel to the longitudinal axis and has a second inner diameter, wherein the first diameter is bigger than the second diameter.

It is an object of the invention to improve such a cutter and rotary support head so as to make it easier to mount a cutter.

### Disclosure of the Invention

### Advantages of the Invention

In accordance with the invention, there is provided a cutter for a vegetation cutting tool comprising a mounting portion for mounting the cutter to a rotary support head of the vegetation cutting tool, wherein the mounting portion has at least one longitudinal axis, and at least one blade portion for cutting vegetation, wherein the blade portion radially extends away from the longitudinal axis and has a first side and a second side opposite from the first side, wherein the longitudinal axis is at least substantially at a right angle to the first side and second side, wherein the mounting portion further comprises a first mounting section and a second mounting section for radially supporting the cutter when mounted to the rotary support head, wherein the first mounting section has a first outer circumference which axially extends away from first side of the blade portion and has at least a first outer diameter and wherein the second mounting section has a second outer circumference which axially extends away from the second side of the blade portion and has at least a second outer diameter, wherein the first diameter is bigger than the second diameter.

Thus, it is easier to mount the cutter to the rotary support head.

In a preferred embodiment, the first diameter is between 30% and 70%, in particular between 45% and 55% bigger than the second diameter, wherein in particular the first diameter has a maximum of 14,1 mm and is preferably between 13,7 and 14 mm, and the second diameter has a maximum of 9,4 mm and is preferably between 9 and 9,3 mm.

In a preferred embodiment, the mounting portion has radially outwardly extending areas on the first and second side of the blade portion for axially supporting the cutter when mounted to the rotary support head, wherein the areas extend at least 2 mm beyond the diameter of the first mounting section.

In a preferred embodiment, at least the first mounting section has a recess extending from the end of the first mounting section which faces away from the cutter into the direction of the second mounting section and having an inner diameter of between 5 and 7 mm or at least the first mounting section has a recess extending from the end of the first mounting section which faces away from the cutter into the direction of the second mounting section and having an inner diameter of between 5 and 7 mm and comprising radially and axially extending slots are arranged on the circumference of the recess.

In a preferred embodiment, the height of the first and second mounting sections is between 2,5 and 3,5 mm, preferably 3 mm, and/or the thickness of the blade in the longitudinal direction is between 1,5 and 2,5 mm, preferably 2 mm.

In a preferred embodiment, the maximum extension of the cutter in a direction perpendicular to the longitudinal axis of the cutter is between 80 and 110 mm, preferably between 95 and 100 mm, or the maximum extension is between 110 and 130 mm, preferably between and 115 and 125 mm.

In a preferred embodiment, the blade portion has a cutting edge with a convex radius of between 250 and 270 mm, preferably 260 mm, and a trailing edge with a concave radius of between 240 and 260 mm, preferably 250 mm, or the blade portion has a cutting edge with a convex radius of between 195 and 215 mm, preferably 206 mm, and a trailing edge with a concave radius of between 190 and 210 mm, preferably 200 mm.

In accordance with the invention, there is provided a rotary support head for the cutter of a vegetation cutting tool comprising a mounting seat for mounting the mounting portion of a cutter, wherein the mounting seat has at least one longitudinal axis, and at least one radial blade opening for a blade portion of the cutter wherein the blade opening radially extends away from the mounting seat and the longitudinal axis towards the outer circumference of the rotary support head and has a first side and a second side opposite from the first side, wherein the longitudinal axis is at least substantially at a right angle to the first side and second side, the mounting seat further comprising a first mounting seat section and a second mounting seat section for radially supporting the cutter when mounted to the rotary support head, wherein the first mounting seat section has a first inner circumference which axially extends away from the blade opening, is parallel to the longitudinal axis and has a first inner diameter and wherein the second mounting seat section has a second inner circumference which axially extends away from the blade opening, is parallel to the longitudinal axis and has a second inner diameter, wherein the first diameter is bigger than the second diameter the mounting seat sections each have an opening towards the centre of the rotary support head and the width of at least one opening is smaller than the diameter of the respective mounting seat section and/or the opening of the second mounting seat section opens into an axially extending hole in the rotary support head which is preferably wider than the second mounting seat section, and/or the opening of the first mounting seat section opens into an axial recess of the rotary support head via an insertion recess for radially outwardly inserting a cutter, wherein the insertion recess is wider than the first mounting seat section, wherein the insertion recess preferably comprises two insertion ramps whose height over the bottom of the insertion recess increases towards the centre of the rotary support head and form a radially extending gap which widens towards the centre of the rotary support head and/or wherein the width of the gap corresponds to the second diameter so that a cutter can only be inserted with the second mounting section inserted through the gap.

Thus, it is easier to assembly the cutter and the rotary support head.
In a preferred embodiment, the first diameter is between 30% and 70%, in particular between 45% and 55%, bigger than the second diameter, wherein in particular the first diameter has a minimum of 14 mm and is preferably between 14,5 and 15,5 mm, and the second diameter has a minimum of 9,4 mm and is preferably between 9,5 and 10,5 mm.

In a preferred embodiment, at least part of the circumferences of at least one of the mounting seat sections is reinforced with a ring segment made from a more durable material than the material of the rotary support head, wherein the ring segment in particularly covers an angle of at least 90°, preferably 180°, and/or wherein the ring segment is non-detachably attached to the rotary support head, wherein the ring segment is preferably an insert around which the rotary support head is injection-moulded.

In a preferred embodiment, the rotary support head comprises a central mounting section with a mounting area for mounting the rotary support head to a vegetation cutter, and an outer ring section around the central mounting section, wherein the first mounting seat is arranged in the outer ring section, wherein the second mounting seat is arranged in a radially extending wall section of the central mounting section.

In a preferred embodiment, the central mounting section is raised above the outer ring section and an intermediate ring section arranged between the central mounting section and the outer ring section, wherein the central mounting section and the intermediate ring section form an axial recess and/or wherein at least the intermediate ring section forms a, in particularly bent, shoulder on the side of the rotary support head where the second seat is located so that the blade portion of a cutter can be pivoted into a position in which it does not extend beyond the outer radial circumference of the rotary support head, wherein the shoulder is at least partially axially open.

The present invention extends to a vegetation cutting assembly comprising at least one cutter according to the invention and a rotary support head according the invention, wherein the cutter is pivotally and detachably mounted to the rotary support head.

The present invention also extends to a vegetation cutter comprising at least one such vegetation cutting assembly, wherein the vegetation cutting assembly is detachably attachable to the vegetation cutter.

### Drawings

An embodiment of the invention will now be described by way of example only and with reference to the accompanying drawings, in which:
- Fig. 1: shows a vegetation cutter,
- Fig. 2: shows a blade of the vegetation cutter in a perspective view,
- Fig. 3: is a top view of the blade,
- Fig. 4: is a bottom view of the blade,
- Fig. 5: shows a vegetation cutting assembly of the vegetation cutter in a perspective view,
- Fig. 6: is a top view of the vegetation cutting assembly,
- Fig. 7: is a bottom view of the vegetation cutting assembly,
- Fig. 8: is a side view of the vegetation cutting assembly and
- Fig. 9: is a section of the vegetation cutting assembly in Fig. 5 along the lines IX-IX but without the blade.

### Description

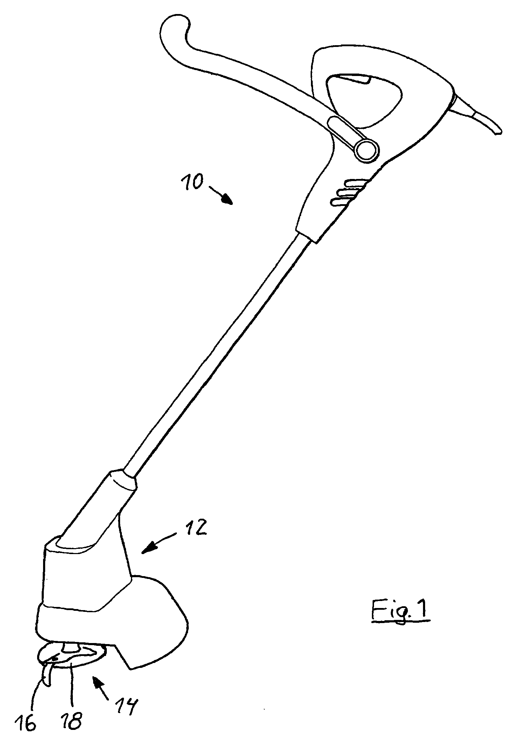

Fig. 1 shows as a lawn trimmer as one embodiment of a vegetation cutter 10. Alternative vegetation cutters can be brush cutters or lawn mowers. The vegetation cutter 10 can be used to cut vegetation such as brushes but also to trim or mow lawn. The vegetation cutter 10 comprises a drive unit 12. A vegetation cutting assembly 14 is mounted to the drive unit 12 of the vegetation cutter 10. The vegetation cutting assembly 14 is detachably attached to the vegetation cutter 10 but can also be non-detachably attached.

The vegetation cutting assembly 14 comprises one cutter 16 and a rotary support head 18. The cutter 16 is pivotally and detachably mounted to the rotary support head 18. Instead of one cutter 16 there can also be two, three, four, five, six or more cutters 18 mounted to the rotary support head 18.

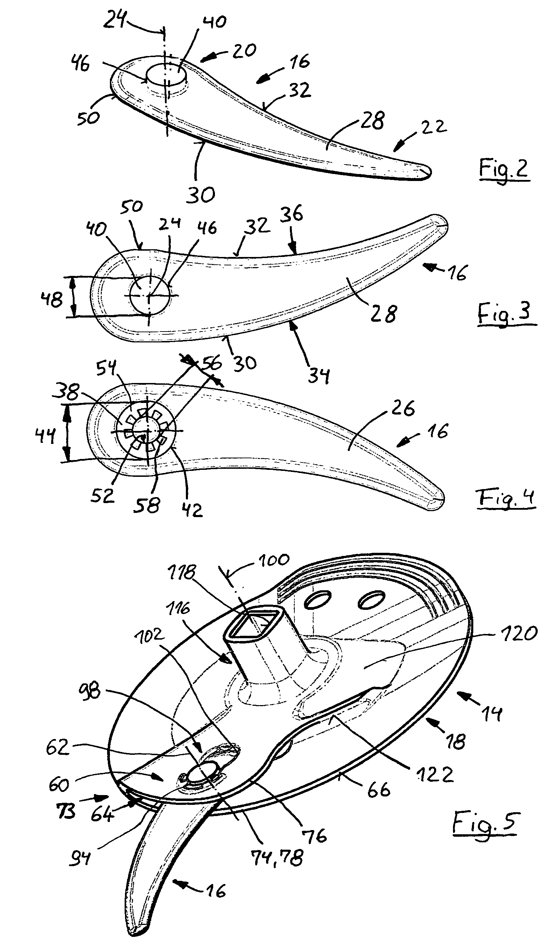

Referring to Fig. 2 - 4, the main portions of the cutter 10 are a mounting portion 20 for mounting the cutter to the rotary support head 18 of the vegetation cutting tool 10 and a blade portion 22 for cutting vegetation.

The mounting portion 20 has a longitudinal axis 24. The longitudinal axis 24 is also a pivot axis for the cutter 16. The thickness of the blade portion 22 in the longitudinal direction - which means in the direction along the longitudinal axis 24 - is between 1,5 and 2,5 mm, preferably 2 mm. The blade portion 22 extends radially away from the longitudinal axis 24 and has a first side 26. When the vegetation cutter 10 is used the first side 26 is normally facing the vegetation to be cut. Opposite from the first side 26 the cutter has a second side 28. The first and second side 26, 28 are at least substantially at a right angle to the longitudinal axis 24. The first and second side 26, 28 are generally flat but can also be rounded.

The blade portion 22 has a cutting edge 30 and a trailing edge 32. The cutting edge 30 has a convex radius 34 of between 250 and 270 mm, preferably 260 mm. The trailing edge 32 has a concave radius 36 of between 240 and 260 mm, preferably 250 mm.

Alternatively, the convex radius 34 can be of between 195 and 215 mm, preferably 206 mm, and the concave radius 36 of between 190 and 210 mm, preferably 200 mm. One or both edges 30, 32 can be serrated.

One or both edges 30, 32 can also be straight or have a different shape such as a wave shape. The shape with the radiuses however is preferred.

The mounting portion 20 comprises a first mounting section 38 and a second mounting section 40 for radially supporting the cutter 16 when mounted to the rotary head 18.

The first mounting section 38 has the shape of a cylinder. Therefore, a first outer circumference 42 of the first mounting section 38 extends axially away from first side 26 of the blade portion 22. The first mounting section 38 has a first outer diameter 44. The first outer diameter 44 has a maximum of 14,1 mm and is preferably between 13,7 and 14 mm.

The second mounting section 40 also the shape of a cylinder. It has a second outer circumference 46 which axially extends away from the second side 28 of the blade portion 22 and has a second outer diameter 48. The second diameter 48 has a maximum of 9,4 mm and is preferably between 9 and 9,3 mm.

According to the invention the first diameter 44 is bigger than the second diameter 48. It is preferred if the first diameter 44 is between 30% and 70% bigger than the second diameter 46. It is yet further preferred if the first diameter 44 is between 45% and 55% bigger than the second diameter 46.

The height of the first and second mounting sections 38, 40 above the first and second side 26 and 28 respectively is preferably 3 mm. A range of between 2,5 and 3,5 mm is also sufficient.

Instead of the shape of a cylinder the first and second mounting sections 38, 40 can also have the shape of cones or one section can have the shape of a cone and the other the shape of a cylinder. It is also possible that at least one of the mounting seats 28, 40 has an outer circumference with one or more stepped diameters. Therefore it is according to the invention that one diameter of one mounting seat is bigger than the diameter of another mounting seat.

The mounting portion 20 has radially outwardly extending areas 50 on the first and second side 26, 28 of the blade portion 22 for axially supporting the cutter 16 when mounted to the rotary support head 18. Preferably, the areas 28 extend at least 2 mm beyond the first diameter 44 of the first mounting section 38.

Referring to Fig. 4, the first mounting section 38 has a recess 52 extending from the end 54 of the first mounting section 38 which faces away from the cutter 16 into the direction of the second mounting section 40. The recess 52 has an inner diameter 56 of between 5 and 7 mm. In addition the recess 52 can comprise radially and axially extending slots 58 that are arranged on the circumference of the recess 52.

Finally, the maximum extension of the cutter 16 in a plane perpendicular to the longitudinal axis of the cutter is between 80 and 110 mm, preferably between 95 and 100 mm. Alternatively the maximum extension is between 110 and 130 mm, preferably between and 115 and 125 mm. The cutter 16 is preferably made from plastic.

Referring to Fig. 5 - 9, the rotary support head 18, which in the following description may only be referred to as the support head 18 or head 18, has generally the shape of a round and flat disk. The diameter is bigger than the height. However, the head 18 can have the shape of a cylinder with a height bigger than the diameter. It can have a shape different from the round shape shown.

The head 18 comprises a mounting seat 60 for mounting the mounting portion 20 of the cutter 16. The mounting seat 60 has a longitudinal axis 62. When mounted to the head 18 the longitudinal axis 62 of the mounting seat 18 and the longitudinal axis 24 of the cutter 16 are aligned, thus enabling the cutter 16 to pivot when the vegetation cutter 10 is used.

The head 18 further comprises one radial blade opening 64 for the blade portion 22 of the cutter 16. The blade opening 64 radially extends away from the mounting seat 60 and the longitudinal axis 62 towards the outer circumference 66 of the head 18. The blade opening 64 has a first side 68 and a second side 70 opposite from the first side 68. The distance 72 between the two sides 64, 70 corresponds to the thickness of the blade portion 22. This means the distance is approximately between 1,5 and 2,5 mm, preferably 2 mm, however preferably with a small gab between the sides 68, 70 and the blade portion 22 of the mounted cutter 16. The longitudinal axis 62 is at least substantially at a right angle to the first side 68 and second side 70.

The radial blade opening 64 is formed in a blade pocket 73 with radially extending first and second side walls portions 74, 76. The first wall portion 74 corresponds with the first side 68. The first wall portion 74 is flush with an outer ring section 78 of the head 18. The outer ring 78 is adjacent the outer circumference 66. The fist wall portion 74 can also be raised from the outer ring section 78. The second wall portion 76 corresponds with the second side 70. It is raised above the first wall portion 74 and the outer ring section 78.

The mounting seat 60 which is arranged in the walls 74, 76 comprises a first mounting seat section 80 and a second mounting seat section 82 for radially supporting the cutter 18 when mounted to the head 18. The first mounting seat 80 is arranged in the first wall 74 and the second mounting seat section 82 is arranged in the second wall 76. The distance between the two mounting seat sections 80, 82 is at least equal to the distance 72.

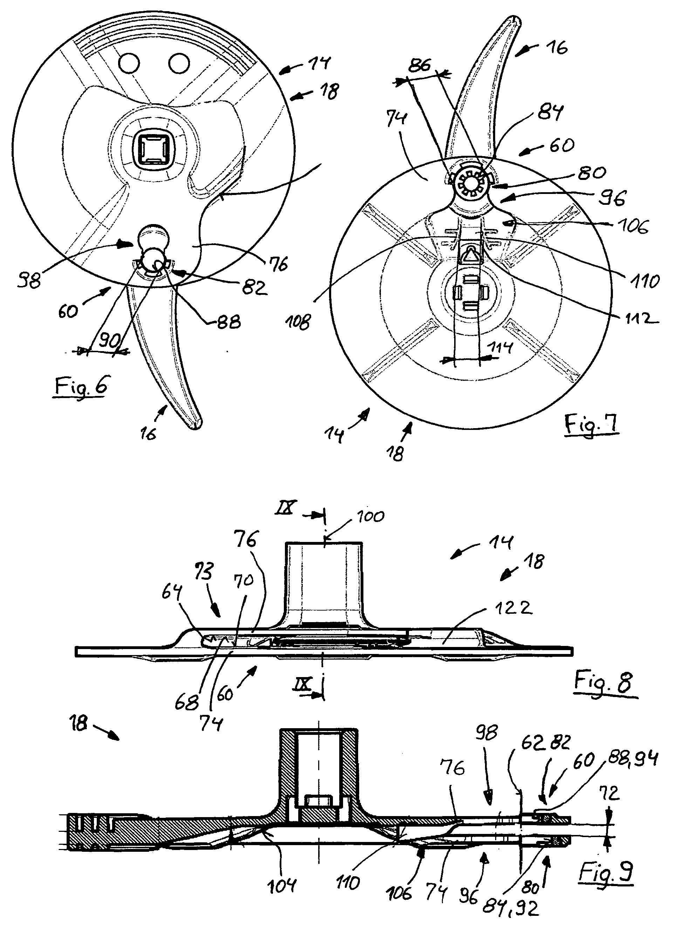

The first mounting seat section 80 has a first inner circumference 84 which axially extends away from the blade opening 64. It is parallel to the longitudinal axis 62 and has a first inner diameter 86 (Fig. 7). The first diameter 86 has a minimum of 14 mm and is preferably between 14,5 and 15,5 mm.

The second mounting seat section 82 has a second inner circumference 88 which axially extends away from the blade portion 64. It is parallel to the longitudinal axis 62 and has a second inner diameter 90 (Fig. 6). The second diameter 90 has a minimum of 9,4 mm and is preferably between 9,5 and 10,5 mm.

According to the invention, the first inner diameter 86 is bigger than the second inner diameter 90. It is preferred if the first diameter 86 is between 30% and 70% bigger than the second diameter 90. It is yet further preferred if the first diameter 86 is between 45% and 55% bigger than the second diameter 90.

Instead of the diameters 86, 90 being parallel to the longitudinal axis 62 the inner circumference 84 and 88 can have steps or a conical shape. But it is according to the invention that one diameter of one mounting seat section is bigger than the diameter of another mounting seat section.

Circumference 84 is reinforced with a first ring segment 92. Circumference 88 is reinforced with a second ring segment 94. In the present embodiment the ring segments 92, 94 are made from metal. It is sufficient if they are a made from a more durable material than the material of the head. At least parts of the circumferences 84, 88 should be reinforced. The ring segments 94, 94 cover an angle of 180°. An angle of at least 90° would be sufficient. But 180° are preferred. The ring segments 92, 94 are non-detachably attached to the head 18. The ring segments 92, 94 are preferably inserts around which the head 18 is injection-moulded. Although one ring segment 92 or 94 can be sufficient, two are preferred. The ring segments 92, 94 are arranged in the wall portions 74, 76 between the longitudinal axis 62 and the outer circumference 66.

The mounting seat section 80 has a first opening 96 towards the centre 100 of the head 18. The width of the opening 96 is smaller than the diameter 86 of the first mounting seat section 80. The mounting seat section 82 also has a second opening 98 towards the rotational axis 100 of the head 18. The width of the opening 98 is smaller than the diameter 86, 90 of the respective mounting seat section 80, 82.

The second opening 98 of the second mounting seat section 82 opens into an axially extending hole 102 in the second wall section 76 or the head 18 respectively. The hole 102 is wider than the second mounting seat section 82.

The first opening 96 of the first mounting seat section 80 opens into an axial recess 104 of the head 18 via an insertion recess 106 for inserting a cutter 16 from the centre of the head 18 radially outwardly. The insertion recess 106 is wider than the first mounting seat section 80. The insertion recess 106 comprises two insertion ramps 108, 110 whose height over the bottom of the insertion recess 106 increases towards the centre of the head 18. The ramps 108, 110 form a radially extending gap 112 which widens towards the centre of the head 18. The width 114 of the gap 112 corresponds to the second diameter 90. The gap 112 therefore corresponds to the second outer diameter 48 of the second mounting section 40. In this way, the cutter 16 can only be inserted with the second mounting section 40 inserted through the gap 112.

The head 18 comprises a central mounting section 116 around the rotational axis 100 with a mounting area 118 for mounting the head 18 to a vegetation cutter 10.

The head 18 also comprises the outer ring section 78 around the central mounting section 116. The first mounting seat section 80 is arranged in the outer ring section 78. The second mounting seat section 82 is arranged in a radially extending wall section 76 of the central mounting section 116.

The central mounting section 116 is raised above the outer ring section 78 and an intermediate ring section 120 arranged between the central mounting section 116 and the outer ring section 78. The central mounting section 116 and the intermediate ring section 120 form the axial recess 104. The intermediate ring section 116 forms shoulder 122 on the side of the head 18 where the second seat section 82 or the second wall 76 is located. The shoulder 122 is preferably bent. The blade portion 22 of the cutter 16 can be pivoted into a position in which it does not extend beyond the outer radial circumference 66 of the head 18. The shoulder 122 is axially open in one longitudinal direction so as not to form a pocket where vegetation can get stuck and block so that the blade portion 22 cannot retract behind the outer circumference 66.

## Claims

1. Cutter (16) for a vegetation cutting tool comprising a mounting portion (20) for mounting the cutter (16) to a rotary support head (18) of the vegetation cutting tool, wherein the mounting portion (20) has at least one longitudinal axis (24), and at least one blade portion (22) for cutting vegetation, wherein the blade portion (22) radially extends away from the longitudinal axis (24) and has a first side (26) and a second side (28) opposite from the first side (26), wherein the longitudinal axis (24) is at least substantially at a right angle to the first side (26) and second side (28), wherein the mounting portion (20) further comprises a first mounting section (38) and a second mounting section (40) for radially supporting the cutter (16) when mounted to the rotary support head (18), wherein the first mounting section (38) has a first outer circumference (42) which axially extends away from first side (26) of the blade portion (22) and has at least a first outer diameter (44) and wherein the second mounting section (40) has a second outer circumference (42) which axially extends away from the second side (28) of the blade portion (22) and has at least a second outer diameter (48), **characterised in that** the first diameter (44) is bigger than the second diameter (48).

2. Cutter (16) according to claim 1, **characterised in that** the first diameter (40) is between 30% and 70%, in particular between 45% and 55% bigger than the second diameter (48), wherein in particular the first diameter (40) has a maximum of 14,1 mm and is preferably between 13,7 and 14 mm, and that the second diameter (48) has a maximum of 9,4 mm and is preferably between 9 and 9,3 mm.

3. Cutter (16) according to one of the preceding claims, **characterised in that** the mounting portion (20) has radially outwardly extending areas (50) on the first and second side (28) of the blade portion (22) for axially supporting the cutter (16) when mounted to the rotary support head (18), wherein the areas extend at least 2 mm beyond the diameter of the first mounting section (38).

4. Cutter (16) according to one of the preceding claims, **characterised in that** at least the first mounting section (38) has a recess(52) extending from the end of the first mounting section (38) which faces away from the cutter (16) into the direction of the second mounting section (40) and having an inner diameter of between 5 and 7 mm or that at least the first mounting section (38) has a recess (52) extending from the end (54) of the first mounting section (38) which faces away from the cutter (16) into the direction of the second mounting section (40) and having an inner diameter (56) of between 5 and 7 mm and comprising radially and axially extending slots (58) are arranged on the circumference of the recess (52).

5. Cutter (16) according to one of the preceding claims, **characterised in that** the height of the first and second mounting section (38,40) is between 2,5 and 3,5 mm, preferably 3 mm, and/or that the thickness of the blade (22) in the longitudinal direction is between 1,5 and 2,5 mm, preferably 2 mm.

6. Cutter (16) according to one of the preceding claims, **characterised in that** the maximum extension of the cutter (16) in a direction perpendicular to the longitudinal axis (24) of the cutter (16) is between 80 and 110 mm, preferably between 95 and 100 mm, or that the maximum extension is between 110 and 130 mm, preferably between and 115 and 125 mm.

7. Cutter (16) according to one of the preceding claims, **characterised in that** the blade portion (22) has a cutting edge (30) with a convex radius (34) of between 250 and 270 mm, preferably 260 mm, and a trailing edge (32) with a concave radius (36) of between 240 and 260 mm, preferably 250 mm, or that the blade portion (22) has a cutting edge (30) with a convex radius (34) of between 195 and 215 mm, preferably 206 mm, and a trailing edge (32) with a concave radius (36) of between 190 and 210 mm, preferably 200 mm.

8. Rotary support head (18) for the cutter (16) of a vegetation cutting tool comprising a mounting seat (60) for mounting the mounting portion (20) of a cutter (16), wherein the mounting seat (60) has at least one longitudinal axis (62), and at least one radial blade opening (64) for a blade portion (22) of the cutter (16) wherein the blade opening (64) radially extends away from the mounting seat (60) and the longitudinal axis (62) towards the outer circumference (66) of the rotary support head (18) and has a first side (68) and a second side (70) opposite from the first side (68), wherein the longitudinal axis (62) is at least substantially at a right angle to the first side (68) and second side (70), the mounting seat (60) further comprising a first mounting seat section (80) and a second mounting seat section (82) for radially supporting the cutter (16) when mounted to the rotary support head (18), wherein the first mounting seat section (80) has a first inner circumference (84) which axially extends away from the blade opening (64), is parallel to the longitudinal axis (62) and has a first inner diameter (86) and wherein the second mounting seat section (82) has a second inner circumference (88) which axially extends away from the blade opening(64), is parallel to the longitudinal axis (62) and has a second inner diameter (90), wherein the first diameter (86) is bigger than the second diameter (90), **characterised in that** the mounting seat sections (80, 82) each have an opening (96,98) towards the centre of the rotary support head (18) and that the width of at least one opening (96, 98) is smaller than the diameter of the respective mounting seat section (80, 82) and/or that the opening of the second mounting seat section (82) opens into an axially extending hole (102) in the rotary support head (18) which is preferably wider than the second mounting seat section (82), and/or that the opening of the first mounting seat section (80) opens into an axial recess (104) of the rotary support head (18) via an insertion recess (106) for radially outwardly inserting a cutter (16), wherein the insertion recess (106) is wider than the first mounting seat section (80), wherein the insertion recess (106) preferably comprises two insertion ramps (108, 110) whose height over the bottom of the insertion recess (106) increases towards the centre of the rotary support head (18) and that form a radially extending gap (112) which widens towards the centre of the rotary support head (18) and/or wherein the width of the gap (112) corresponds to the second diameter (90) so that a cutter (16) can only be inserted with the second mounting section (82) inserted through the gap (112).

9. Rotary support head (18) according to claim 8, **characterised in that** the first diameter (86) is between 30% and 70%, in particular between 45% and 55%, bigger than the second diameter (90), wherein in particular the first diameter (86) has a minimum of 14 mm and is preferably between 14,5 and 15,5 mm, and that the second diameter (90) has a minimum of 9,4 mm and is preferably between 9,5 and 10,5 mm.

10. Rotary support head (18) according to one of claims 8 or 9, **characterised in that** at least part of the circumferences (84, 88) of at least one of the mounting seat sections (80, 82) is reinforced with a ring segment (92, 94) made from a more durable material than the material of the rotary support head (18), wherein the ring segment (92, 94) in particularly covers an angle of at least 90°, preferably 180°, and/or wherein the ring segment (92, 94) is non-detachably attached to the rotary support head (18), wherein the ring segment (92, 94) is preferably an insert around which the rotary support head (18) is injection-moulded.

11. Rotary support head (18) according to one of claims 8 to 10, **characterised in that** the rotary support head (18) comprises a central mounting section (116) with a mounting area (118) for mounting the rotary support head (18) to a vegetation cutter (16), and an outer ring section around the central mounting section, wherein the first mounting seat is arranged in the outer ring section (78), wherein the second mounting seat (80) is arranged in a radially extending wall section of the central mounting section (116).

12. Rotary support head (18) according to claim 11, **characterised in that** the central mounting section (116) is raised above the outer ring section (78) and that an intermediate ring section (120) arranged between the central mounting section (116) and the outer ring section (78), wherein the central mounting section (116) and the intermediate ring section (120) form an axial recess (104) and/or wherein at least the intermediate ring section (120) forms a in particularly bent, shoulder (122) on the side of the rotary support head (18) where the second seat (82) is located so that the blade portion (22) of a cutter (16) can be pivoted into a position in which it does not to extend beyond the outer radial circumference (66) of the rotary support head (18), wherein the shoulder.(122) is at least partially axially open.

13. A vegetation cutting assembly comprising at least one cutter (16) according to one of claims 1 to 7 and a rotary support head (18) according to one of claims 8 to 12, **characterised in that** the cutter (16) is pivotally and detachably mounted to the rotary support head (18).

14. A vegetation cutter (16) comprising at least one vegetation cutting assembly according to claim 13, **characterised in that** the vegetation cutting assembly is detachably attachable to the vegetation cutter (16).

## Patentansprüche

1. Messer (16) für ein Pflanzenschneidwerkzeug, das einen Montageabschnitt (20) zum Montieren des Messers (16) an einen Rotationsstützkopf (18) des Pflanzenschneidwerkzeugs umfasst, wobei der Montageabschnitt (20) wenigstens eine Längsachse (24) und wenigstens einen Blattabschnitt (22) zum Schneiden von Pflanzenteilen aufweist, wobei sich der Blattabschnitt (22) radial von der Längsachse (24) weg erstreckt und eine erste Seite (26) sowie eine zweite Seite (28) aufweist, die der ersten Seite (26) gegenüberliegt, wobei die Längsachse (24) wenigstens im Wesentlichen in einem rechten Winkel zur ersten Seite (26) und zur zweiten Seite (28) steht, wobei der Montageabschnitt (20) weiterhin einen ersten Montagebereich (38) und einen zweiten Montagebereich (40) zum radialen Stützen des Messers (16) bei Montage am Rotationsstützkopf (18) umfasst, wobei der erste Montagebereich (38) einen ersten Außenumfang (42), der sich axial von der ersten Seite (26) des Blattabschnitts (22) weg erstreckt, und wenigstens einen ersten Außendurchmesser (44) aufweist, und wobei der zweite Montagebereich (40) einen zweiten Außenumfang (42), der sich axial von der zweiten Seite (28) des Blattabschnitts (22) weg erstreckt, und wenigstens einen zweiten Außendurchmesser (48) aufweist, **dadurch gekennzeichnet, dass** der erste Durchmesser (44) größer ist als der zweite Durchmesser (48).

2. Messer (16) nach Anspruch 1, **dadurch gekennzeichnet, dass** der erste Durchmesser (40) zwischen 30 % und 70 %, insbesondere zwischen 45 % und 55 %, größer ist als der zweite Durchmesser (48), wobei insbesondere der erste Durchmesser (40) maximal 14,1 mm beträgt und vorzugsweise zwischen 13,7 und 14 mm liegt, und dass der zweite Durchmesser (48) maximal 9,4 mm beträgt und vorzugsweise zwischen 9 und 9,3 mm liegt.

3. Messer (16) nach einem der vorstehenden Ansprüche, **dadurch gekennzeichnet, dass** der Montageabschnitt (20) sich radial nach außen erstreckende Zonen (50) an der ersten und zweiten Seite (28) des Blattabschnitts (22) zum axialen Stützen des Messers (16) bei Montage am Rotationsstützkopf (18) aufweist, wobei sich die Zonen wenigstens 2 mm über den Durchmesser des ersten Montagebereichs (38) hinaus erstrecken.

4. Messer (16) nach einem der vorstehenden Ansprüche, **dadurch gekennzeichnet, dass** wenigstens der erste Montagebereich (38) eine Ausnehmung (52) aufweist, die sich vom Ende des ersten Montagebereichs (38), abgewandt vom Messer (16), in Richtung des zweiten Montagebereichs (40) erstreckt und einen Innendurchmesser zwischen 5 und 7 mm aufweist, oder dass wenigstens der erste Montagebereich (38) eine Ausnehmung (52) aufweist, die sich vom Ende (54) des ersten Montagebereichs (38), abgewandt vom Messer (16), in Richtung des zweiten Montagebereichs (40) erstreckt, einen Innendurchmesser (56) zwischen 5 und 7 mm aufweist und sich radial und axial erstreckende Nuten (58) umfasst, die am Umfang der Ausnehmung (52) angeordnet sind.

5. Messer (16) nach einem der vorstehenden Ansprüche, **dadurch gekennzeichnet, dass** die Höhe des ersten und des zweiten Montagebereichs (38, 40) zwischen 2,5 und 3,5 mm liegt, vorzugsweise 3 mm beträgt, und/oder dass die Dicke des Blatts (22) in der Längsrichtung zwischen 1,5 und 2,5 mm liegt, vorzugsweise 2 mm beträgt.

6. Messer (16) nach einem der vorstehenden Ansprüche, **dadurch gekennzeichnet, dass** die maximale Ausdehnung des Messers (16) in einer senkrechten Richtung zur Längsachse (24) des Messers (16) zwischen 80 und 110 mm, vorzugsweise zwischen 95 und 100 mm liegt, oder dass die maximale Ausdehnung zwischen 110 und 130 mm, vorzugsweise zwischen 115 und 125 mm, liegt.

7. Messer (16) nach einem der vorstehenden Ansprüche, **dadurch gekennzeichnet, dass** der Blattabschnitt (22) eine Schneidkante (30) mit einem konvexen Radius (34) zwischen 250 und 270 mm, vorzugsweise 260 mm, und eine Hinterkante (32) mit einem konkaven Radius (36) zwischen 240 und 260 mm, vorzugsweise 250 mm, aufweist, oder dass der Blattabschnitt (22) eine Schneidkante (30) mit einem konvexen Radius (34) zwischen 195 und 215 mm, vorzugsweise 206 mm, und eine Hinterkante (32) mit einem konkaven Radius (36) zwischen 190 und 210 mm, vorzugsweise 200 mm, aufweist.

8. Rotationsstützkopf (18) für das Messer (16) eines Pflanzenschneidwerkzeugs umfassend einen Montagesitz (60) zum Montieren des Montageabschnitts (20) eines Messers (16), wobei der Montagesitz (60) wenigstens eine Längsachse (62) und wenigstens eine radiale Blattöffnung (64) für einen Blattabschnitt (22) des Messers (16) aufweist, wobei sich die Blattöffnung (64) radial weg vom Montagesitz (60) und der Längsachse (62) hin zum Außenumfang (66) des Rotationsstützkopfes (18) erstreckt und eine erste Seite (68) sowie eine zweite Seite (70), die der ersten Seite (68) gegenüberliegt, aufweist, wobei die Längsachse (62) wenigstens im Wesentlichen in einem rechten Winkel zur ersten Seite (68) und zur zweiten Seite (70) steht, der Montagesitz (60) weiterhin einen ersten Montagesitzbereich (80) und einen zweiten Montagesitzbereich (82) zum radialen Stützen des Messers (16) bei Montage am Rotationsstützkopf (18) umfasst, wobei der erste Montagesitzbereich (80) einen ersten Innenumfang (84) aufweist, der sich axial von der Blattöffnung (64) weg erstreckt, parallel zur Längsachse (62) ist und einen ersten Innendurchmesser (86) aufweist, und wobei der zweite Montagesitzbereich (82) einen zweiten Innenumfang (88) aufweist, der sich axial von der Blattöffnung (64) weg erstreckt, parallel zur Längsachse (62) ist, und einen zweiten Innendurchmesser (90) aufweist, wobei der erste Durchmesser (86) größer ist als der zweite Durchmesser (90), **dadurch gekennzeichnet, dass** die Montagesitzbereiche (80, 82) jeweils eine Öffnung (96, 98) zur Mitte des Rotationsstützkopfes (18) aufweisen, und dass die Breite wenigstens einer Öffnung (96, 98) kleiner ist als der Durchmesser des entsprechenden Montagesitzbereichs (80, 82), und/oder dass die Öffnung des zweiten Montagesitzbereichs (82) in eine sich axial erstreckende Öffnung (102) im Rotationsstützkopf (18) mündet, die vorzugsweise breiter ist als der zweite Montagesitzbereich (82), und/oder dass die Öffnung des ersten Montagesitzbereichs (80) in eine axiale Ausnehmung (104) des Rotationsstützkopfes (18) über eine Einsetzausnehmung (106) zum radialen Einsetzen eines Messers (16) nach außen mündet, wobei die Einsetzausnehmung (106) breiter ist als der erste Montagesitzbereich (80), wobei die Einsetzausnehmung (106) vorzugsweise zwei Einsetzrampen (108, 110) umfasst, deren Höhe über dem Grund der Einsetzausnehmung (106) zur Mitte des Rotationsstützkopfes (18) hin zunimmt, und die einen sich radial erstreckenden Spalt (112) bilden, der sich zur Mitte des Rotationsstützkopfes (18) hin verbreitert, und/oder wobei die Breite des Spalts (112) dem zweiten Durchmesser (90) entspricht, sodass ein Messer (16) nur mit dem zweiten Montagebereich (82) durch den Spalt (112) eingeführt eingesetzt werden kann.

9. Rotationsstützkopf (18) nach Anspruch 8, **dadurch gekennzeichnet, dass** der erste Durchmesser (86) zwischen 30 % und 70 %, insbesondere zwischen 45 % und 55%, größer ist als der zweite Durchmesser (90), wobei insbesondere der erste Durchmesser (86) minimal 14 mm beträgt und vorzugsweise zwischen 14,5 und 15,5 mm liegt, und dass der zweite Durchmesser (90) minimal 9,4 mm beträgt und vorzugsweise zwischen 9,5 und 10,5 mm liegt.

10. Rotationsstützkopf (18) nach einem der Ansprüche 8 oder 9, **dadurch gekennzeichnet, dass** wenigstens ein Teil der Umfänge (84, 88) von wenigstens einem der Montagesitzbereiche (80, 82) durch ein Ringsegment (92, 94) verstärkt ist, das aus einem stabileren Material als das Material des Rotationsstützkopfes (18) besteht, wobei das Ringsegment (92, 94) insbesondere einen Winkel von wenigstens 90°, vorzugsweise 180°, abdeckt, und/oder wobei das Ringsegment (92, 94) nicht abnehmbar am Rotationsstützkopf (18) angebracht ist, wobei das Ringsegment (92, 94) vorzugsweise ein Einsatz ist, um den der Rotationsstützkopf (18) spritzgegossen ist.

11. Rotationsstützkopf (18) nach einem der Ansprüche 8 bis 10, **dadurch gekennzeichnet, dass** der Rotationsstützkopf (18) einen zentralen Montagebereich (116) mit einer Montagezone (118) zur Montage des Rotationsstützkopfes (18) an eine Pflanzenschneidvorrichtung (16) und einen Außenringbereich um den zentralen Montagebereich umfasst, wobei der erste Montagesitz im Außenringbereich (78) angeordnet ist, und wobei der zweite Montagesitz (80) in einem sich radial erstreckenden Wandbereich des zentralen Montagebereichs (116) angeordnet ist.

12. Rotationsstützkopf (18) nach Anspruch 11, **dadurch gekennzeichnet, dass** der zentrale Montagebereich (116) über den Außenringbereich (78) gehoben, und dass ein Zwischenringbereich (120) zwischen dem zentralen Montagebereich (116) und dem Außenringbereich (78) angeordnet ist, wobei der zentrale Montagebereich (116) und der Zwischenringbereich (120) eine axiale Ausnehmung (104) bilden, und/oder wobei wenigstens der Zwischenringbereich (120) eine, insbesondere gebogene, Schulter (122) an der Seite des Rotationsstützkopfes (18) bildet, wo sich der zweite Sitz (82) befindet, sodass der Blattabschnitt (22) eines Messers (16) in eine Stellung geschwenkt werden kann, in der er sich nicht über den radialen Außenumfang (66) des Rotationsstützkopfes (18) hinaus erstreckt, wobei die Schulter (122) wenigstens teilweise axial geöffnet ist.

13. Pflanzenschneidanordnung umfassend wenigstens ein Messer (16) nach einem der Ansprüche 1 bis 7 und einen Rotationsstützkopf (18) nach einem der Ansprüche 8 bis 12, **dadurch gekennzeichnet, dass** das Messer (16) schwenkbar und abnehmbar am Rotationsstützkopf (18) montiert ist.

14. Pflanzenschneidvorrichtung (16) umfassend wenigstens eine Pflanzenschneidanordnung nach Anspruch 13, **dadurch gekennzeichnet, dass** die Pflanzenschneidanordnung abnehmbar an der Pflanzenschneidvorrichtung (16) angebracht ist.

## Revendications

1. Organe de coupe (16) pour un outil de coupe de végétation comprenant une partie de montage (20) servant au montage de l'organe de coupe (16) sur une tête de support rotative (18) de l'outil de coupe de végétation, la partie de montage (20) comportant au moins un axe longitudinal (24), et au moins une partie lame (22) servant à couper la végétation, la partie lame (22) s'étendant radialement dans une direction s'éloignant de l'axe longitudinal (24) et comportant un premier côté (26) et un second côté (28) opposé au premier côté (26), l'axe longitudinal (24) étant au moins essentiellement à angle droit vis-à-vis du premier côté (26) et du second côté (28), la partie de montage (20) comprenant en outre une première section de montage (38) et une seconde section de montage (40) servant à supporter radialement l'organe de coupe (16) lorsqu'il est monté sur la tête de support rotative (18), la première section de montage (38) présentant une première circonférence extérieure (42) qui s'étend axialement dans une direction s'éloignant du premier côté (26) de la partie lame (22) et présentant au moins un premier diamètre extérieur (44) et la seconde partie de montage (40) présentant une seconde circonférence extérieure (42) qui s'étend axialement dans une direction s'éloignant du second côté (28) de la partie lame (22) et présentant au moins un second diamètre extérieur (48), **caractérisé en ce que** le premier diamètre (44) est supérieur au second diamètre (48).

2. Organe de coupe (16) selon la revendication 1, **caractérisé en ce que** le premier diamètre (40) est 30 % à 70 %, en particulier 45 % à 55 % supérieur au second diamètre (48), en particulier le premier diamètre (40) présentant une valeur maximale de 14,1 mm et étant de préférence compris entre 13,7 et 14 mm, et **en ce que** le second diamètre (48) présente une valeur maximale de 9,4 mm et est de préférence compris entre 9 et 9,3 mm.

3. Organe de coupe (16) selon l'une des revendications précédentes, **caractérisé en ce que** la partie de montage (20) comporte des régions (50) s'étendant radialement vers l'extérieur sur le premier et le second côté (28) de la partie lame (22) servant à supporter axialement l'organe de coupe (16) lorsqu'il est monté sur la tête de support rotative (18), les régions s'étendant sur au moins 2 mm au-delà du diamètre de la première section de montage (38).

4. Organe de coupe (16) selon l'une des revendications précédentes, **caractérisé en ce qu'**au moins la première section de montage (38) comporte une cavité (52) s'étendant de l'extrémité de la première section de montage (38) qui est orientée dans une direction s'éloignant de l'organe de coupe (16), en direction de la seconde section de montage (40) et présentant un diamètre intérieur compris entre 5 et 7 mm ou **en ce qu'**au moins la première section de montage (38) comporte une cavité (52) s'étendant de l'extrémité (54) de la première section de montage (38) qui est orientée dans une direction s'éloignant de l'organe de coupe (16), en direction de la seconde section de montage (40) et présentant un diamètre intérieur (56) compris entre 5 et 7 mm et comprenant des fentes (58) s'étendant radialement et axialement sont disposées sur la circonférence de la cavité (52).

5. Organe de coupe (16) selon l'une des revendications précédentes, **caractérisé en ce que** la hauteur des première et seconde sections de montage (38, 40) est comprise entre 2,5 et 3,5 mm, de préférence est de 3 mm, et/ou **en ce que** l'épaisseur de la lame (22) dans la direction longitudinale est comprise entre 1,5 et 2,5 mm, de préférence est de 2 mm.

6. Organe de coupe (16) selon l'une des revendications précédentes, **caractérisé en ce que** l'étendue maximale de l'organe de coupe (16) dans une direction perpendiculaire à l'axe longitudinal (24) de l'organe de coupe (16) est comprise entre 80 et 110 mm, de préférence entre 95 et 100 mm, ou en ce que l'étendue maximale est comprise entre 110 et 130 mm, de préférence entre 115 et 125 mm.

7. Organe de coupe (16) selon l'une des revendications précédentes, **caractérisé en ce que** la partie lame (22) comporte un bord de coupe (30) présentant un rayon convexe (34) compris entre 250 et 270 mm, de préférence de 260 mm, et un bord postérieur (32) présentant un rayon concave (36) compris entre 240 et 260 mm, de préférence de 250 mm, ou **en ce que** la partie lame (22) comporte un bord de coupe (30) présentant un rayon convexe (34) compris entre 195 et 215 mm, de préférence de 206 mm, et un bord postérieur (32) présentant un rayon concave (36) compris entre 190 et 210 mm, de préférence de 200 mm.

8. Tête de support rotative (18) pour l'organe de coupe (16) d'un outil de coupe de végétation comprenant un siège de montage (60) servant au montage de la partie de montage (20) d'un organe de coupe (16), le siège de montage (60) présentant au moins un axe longitudinal (62), et au moins une ouverture pour lame (64) radiale pour une partie lame (22) de l'organe de coupe (16), l'ouverture pour lame (64) s'étendant radialement dans une direction s'éloignant du siège de montage (60) et de l'axe longitudinal (62) vers la circonférence extérieure (66) de la tête de support rotative (18) et comportant un premier côté (68) et un second côté (70) opposé au premier côté (68), l'axe longitudinal (62) étant au moins essentiellement à angle droit vis-à-vis du premier côté (68) et du second côté (70), le siège de montage (60) comprenant en outre une première section de siège de montage (80) et une seconde section de siège de montage (82), servant à supporter radialement l'organe de coupe (16) lorsqu'il est monté sur la tête de support rotative (18), la première section de siège de montage (80) présentant une première circonférence intérieure (84) qui s'étend axialement dans une direction s'éloignant de l'ouverture pour lame (64), étant parallèle à l'axe longitudinal (62) et présentant un premier diamètre intérieur (86) et la seconde section de siège de montage (82) présentant une seconde circonférence intérieure (88) qui s'étend axialement dans une direction s'éloignant de l'ouverture pour lame (64), étant parallèle à l'axe longitudinal (62) et présentant un second diamètre intérieur (90), le premier diamètre (86) étant supérieur au second diamètre (90), **caractérisée en ce que** les sections de siège de montage (80, 82) comportent chacune une ouverture (96, 98) vers le centre de la tête de support rotative (18) et **en ce que** la largeur d'au moins une ouverture (96, 98) est inférieure au diamètre de la section de siège de montage (80, 82) respective et/ou **en ce que** l'ouverture de la seconde section de siège de montage (82) débouche dans un trou (102) s'étendant axialement dans la tête de support rotative (18) qui est de préférence plus large que la seconde section de siège de montage (82), et/ou **en ce que** l'ouverture de la première section de siège de montage (80) débouche dans une cavité axiale (104) de la tête de support rotative (18) par le biais d'une cavité d'insertion (106) servant à l'insertion radialement vers l'extérieur d'un organe de coupe (16), la cavité d'insertion (106) étant plus large que la première section de siège de montage (80), la cavité d'insertion (106) comprenant de préférence deux plans inclinés d'insertion (108, 110) dont la hauteur au-dessus du fond de la cavité d'insertion (106) augmente vers le centre de la tête de support rotative (18) et qui forment un espace (112) s'étendant radialement qui s'élargit vers le centre de la tête de support rotative (18) et/ou la largeur de l'espace (112) correspondant au second diamètre (90) de telle sorte qu'un organe de coupe (16) puisse uniquement être inséré avec la seconde section de montage (82) insérée à travers l'espace (112).

9. Tête de support rotative (18) selon la revendication 8, **caractérisée en ce que** le premier diamètre (86) est 30 % à 70 %, en particulier 45 % à 55 %, supérieur au second diamètre (90), en particulier le premier diamètre (86) présentant une valeur minimale de 14 mm et étant de préférence compris entre 14,5 et 15,5 mm, et **en ce que** le second diamètre (90) présente une valeur minimale de 9,4 mm et est de préférence compris entre 9,5 et 10,5 mm.

10. Tête de support rotative (18) selon l'une des revendications 8 et 9, **caractérisée en ce qu'**au moins une partie des circonférences (84, 88) d'au moins une des sections de siège de montage (80, 82) est renforcée avec un segment d'anneau (92, 94) constitué d'un matériau plus durable que le matériau de la tête de support rotative (18), le segment d'anneau (92, 94) couvrant en particulier un angle d'au moins 90°, de préférence de 180°, et/ou le segment d'anneau (92, 94) étant attaché de manière non-amovible à la tête de support rotative (18), le segment d'anneau (92, 94) étant de préférence un insert autour duquel la tête de support rotative (18) est moulée par injection.

11. Tête de support rotative (18) selon l'une des revendications 8 à 10, **caractérisée en ce que** la tête de support rotative (18) comprend une section de montage centrale (116) comportant une région de montage (118) servant au montage de la tête de support rotative (18) sur un dispositif de coupe (16) de végétation, et une section annulaire extérieure autour de la section de montage centrale, le premier siège de montage étant disposé dans la section annulaire extérieure (78), le second siège de montage (80) étant disposé dans une section de paroi s'étendant radialement de la section de montage centrale (116).

12. Tête de support rotative (18) selon la revendication 11, **caractérisée en ce que** la section de montage centrale (116) est surélevée au-dessus de la section annulaire extérieure (78) et **en ce qu'**une section annulaire intermédiaire (120) disposée entre la section de montage centrale (116) et la section annulaire extérieure (78), la section de montage centrale (116) et la section annulaire intermédiaire (120) formant une cavité axiale (104) et/ou au moins la section annulaire intermédiaire (120) formant un épaulement (122), en particulier courbé, sur le côté de la tête de support rotative (18) où se trouve le second siège (82) de telle sorte que la partie lame (22) d'un organe de coupe (16) puisse être pivotée jusqu'à une position dans laquelle elle ne s'étend pas au-delà de la circonférence radiale extérieure (66) de la tête de support rotative (18), l'épaulement (122) étant au moins partiellement ouvert axialement.

13. Ensemble de coupe de végétation comprenant au moins un organe de coupe (16) selon l'une des revendications 1 à 7 et une tête de support rotative (18) selon l'une des revendications 8 à 12, **caractérisé en ce que** l'organe de coupe (16) est monté à pivotement et de manière amovible sur la tête de support rotative (18).

14. Dispositif de coupe de végétation (16) comprenant au moins un ensemble de coupe de végétation selon la revendication 13, **caractérisé en ce que** l'ensemble de coupe de végétation peut être attaché de manière amovible au dispositif de coupe de végétation (16).
